# EUROPÄISCHE PATENTANMELDUNG

(11) **EP 3 702 427 A1**
(43) Veröffentlichungstag der Anmeldung: **02.09.2020**
(21) Anmeldenummer: 20159516.2
(22) Anmeldetag: 26.02.2020
(51) Int. Cl.: C09J 7/38

(54) **BEIDSEITIG MIT KLEBSTOFF BESCHICHTETE FOLIEN**

(30) Priorität: 26.02.2019 DE 102019104842
(71) Anmelder: tremco illbruck GmbH, 92439 Bodenwöhr (DE)
(72) Erfinder: NAUCK, Helmar, 12557 Berlin (DE); KOMMA, Markus, 93133 Burglengenfeld (DE)
(74) Vertreter: Bittner, Bernhard

(57) **Zusammenfassung**

Verfahren zum Herstellen einer Folie (1) und insbesondere einer Anschlussfolie zum Abdichten von Baukörpern wobei ein folienartiger Träger (22) mittels einer Transporteinrichtung entlang eines vorgegebenen Transportpfads transportiert wird und wobei sich dieser folienartige Träger (22) in der Transportrichtung (T) und einer zu dieser Transportrichtung senkrechten Breitenrichtung (B) erstreckt, und wobei dieser folienartige Träger eine erste Oberfläche (12) aufweist, sowie eine zweite Oberfläche (14), welche der ersten Oberfläche (12) gegenüberliegt,
dadurch kennzeichnet, dass
während des Transports mittels einer ersten Beaufschlagungseinrichtung (2) auf die erste Oberfläche (12) ein fließfähiges Klebematerial aufgebracht wird, wobei dieses fließfähige Klebematerial als Klebestreifen auf dem folienartigen Träger (22) aufgebracht wird, der sich in der Transportrichtung (T) und in der Breitenrichtung (B) erstreckt und wobei mittels einer zweiten Beaufschlagungseinrichtung (4) auf die zweite Oberfläche (14) ein fließfähiges Klebematerial aufgebracht wird, wobei dieses fließfähige Klebematerial als Klebestreifen auf dem folienartigen Träger (22) aufgebracht wird, der sich in der Transportrichtung (T) und in der Breitenrichtung erstreckt.

## Beschreibung

Die vorliegende Erfindung bezieht sich auf ein Verfahren zum Herstellen einer Folie und insbesondere einer Anschlussfolie zum Abdichten von Baukörpern. Derartige Produkte sind seit Langem als sogenannte Anschlussfolien, beispielsweise für Fenster und Türen und Fassadenbauteile bekannt. Üblicherweise werden diese Folien mittels Selbstklebeschichten bzw. Selbstklebebändern, die auf einem Träger befestigt werden, ausgeführt. Nachteilhaft an der Verwendung derartiger Selbstklebungen ist, dass das Aufbringen derartiger Klebestreifen relativ aufwendig ist, und der Herstellungsprozess auch nach beispielsweise 25 bis 75 m, nämlich einer Rollenlänge, einer derartigen Selbstklebung unterbrochen werden muss.

Der vorliegenden Erfindung liegt daher die Aufgabe zugrunde, eine derartige Folie herzustellen, ohne dass es bei diesem Herstellprozess zu Unterbrechungen bzw. längeren Unterbrechungen beispielsweise zum Auswechseln eines Klebebandes kommt.

Diese Aufgabe wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Herstellen einer Folie und insbesondere einer Anschlussfolie zum Abdichten von Baukörpern, wird eine Folie und/oder ein folienartiger Träger mittels einer Transporteinrichtung entlang eines vorgegebenen Transportpfades transportiert und dieser folienartige Träger erstreckt sich in der Transportrichtung und einer zu der Transportrichtung senkrechten Breitenrichtung wobei dieser folienartige Träger eine erste Oberfläche aufweist, sowie eine zweite Oberfläche, welche der ersten Oberfläche gegenüberliegt. Bevorzugt erstrecken sich dabei sowohl die erste Oberfläche als auch die zweite Oberfläche sowohl in der Transportrichtung als auch in der oben erwähnten Breitenrichtung.

Erfindungsgemäß wird während des Transports mittels einer ersten Beaufschlagungseinrichtung auf die erste Oberfläche ein fließfähiges Klebematerial aufgebracht, wobei dieses fließfähige Klebematerial als Klebestreifen auf der Folie aufgebracht wird, der sich in der Transportrichtung und in der Breitenrichtung erstreckt und wobei mittels einer zweiten Beaufschlagungseinrichtung auf die zweite Oberfläche ein fließfähiges Klebematerial aufgebracht wird, wobei dieses fließfähige Klebematerial als Klebestreifen auf der Folie aufgebracht wird, wobei sich der Klebestreifen in der Transportrichtung und in der Breitenrichtung erstreckt.

Unter einem Aufbringen während eines Transports wird insbesondere ein Aufbringen während der Bewegung des folienartigen Trägers verstanden, das heißt, während der folienartige Träger in der Transportrichtung transportiert wird. Bevorzugt wird die Folie und/oder der folienartige Träger mit einer gleichmäßigen Geschwindigkeit transportiert und/oder die Transportgeschwindigkeit nicht geändert. Bevorzugt handelt es sich bei dem Beaufschlagen um ein Beschichten.

Bei einem bevorzugten Verfahren wird die Folie und/oder der folienartige Träger wenigstens abschnittweise mittels Rollen geführt, wobei bevorzugt auch teilweise durch die besagten Rollen die Transportrichtung des folienartigen Trägers geändert wird, diese beispielsweise um 90° oder um 180° umgelenkt wird.

Bei einem weiteren bevorzugten Verfahren wird die Klebeschicht in einem Bereich des Transportwegs aufgebracht, in dem die Folie zwischen zwei Rollen transportiert wird. Bevorzugt weisen diese beiden Rollen einen Abstand zueinander auf, der (bezogen auf den Außenumfang der beiden Rollen) geringer ist als 50cm, bevorzugt geringer als 40cm, bevorzugt geringer als 30cm und bevorzugt geringer als 20cm.

Bevorzugt wird das Klebematerial aufgebracht, während die Folie in einer im Wesentlichen horizontalen Ebene transportiert wird bzw. auf einen Oberflächenabschnitt aufgebracht, der sich in einer im Wesentlichen horizontalen Ebene erstreckt. Es wäre jedoch auch denkbar, dass der Transport der Folie in einer vertikalen Richtung erfolgt und/oder dass der Klebefilm aufgetragen wird, während die Folie in einer vertikalen Richtung transportiert wird. Daneben wäre es auch denkbar, dass die Folie in einer schrägen Richtung transportiert wird.

Bei einem bevorzugten Verfahren wird das Klebematerial mit Schichtdichte aufgebracht, welche größer ist als 0,01 mm, bevorzugt größer als 0,03 mm, bevorzugt größer als 0,05 mm, bevorzugt größer als 0,08 mm und besonders bevorzugt größer als 0,1 mm.

Bevorzugt wird das Klebematerial in einer Schichtdicke aufgebracht, welche kleiner ist als 2,0 mm, bevorzugt kleiner als 1,5 mm, bevorzugt kleiner als 1,2 mm, bevorzugt kleiner als 1,0 mm, bevorzugt kleiner als 0,8 mm und besonders bevorzugt kleiner als 0,6 mm.

Bei dem bevorzugten Verfahren werden also ganze Rollen bzw. Dockrollen mit dem Klebstoff insbesondere einem Schmelzklebstoff beschichtet. Dies soll dabei bevorzugt ohne Unterbrechung durchgeführt werden.

Bevorzugt ist das fließfähige Klebematerial ein Schmelzklebstoff und/oder das Klebematerial wird vor dem Aufbringen auf die Folie bzw. den Träger erwärmt.

Wie unten genauer erwähnt, soll dieses Beschichten bevorzugt ohne ein Umklappen der Folie bzw. des Folienträgers erfolgen. Dies bedeutet, dass die Folie zumindest während der Beaufschlagung mit den Klebeschichten jeweils entlang ihrer vollständigen Breite transportiert wird.

Bei einem bevorzugten Verfahren handelt es sich bei dem Klebematerial um ein Hotmelt-Klebematerial, das heißt insbesondere um einen Heißleim. Insbesondere kann sich um einen "dauerklebrigen" Heißleim handeln.

Bei einem weiteren bevorzugten Verfahren bringt wenigstens eine Beaufschlagungseinrichtung, und bringen bevorzugt mehrere Beaufschlagungseinrichtungen, und bevorzugt alle Beaufschlagungseinrichtungen das Klebematerial mittels wenigstens einer Düseneinrichtung auf die Oberfläche auf bzw. an der Oberfläche an.

Bevorzugt ist eine Vielzahl von Düsen vorgesehen. Besonders bevorzugt handelt es sich bei diesen Düsen um Breitschlitzdüsen. Auf diese Weise ist eine großflächige und dennoch gleichmäßige Beaufschlagung der jeweiligen Oberflächen mit dem Klebematerial möglich.

Bevorzugt wird daher sowohl die Vorderseite als auch die Rückseite mit einem Klebstoff beaufschlagt.

Bei einem weiteren bevorzugten Verfahren ist wenigstens eine Beaufschlagungseinrichtung und sind bevorzugt beide oder mehrere Beaufschlagungseinrichtungen oberhalb der zu beaufschlagenden Folie bzw. des zu beaufschlagenden folienartigen Trägers angeordnet. Um dies zu erreichen ist es, wie oben erwähnt, beispielsweise möglich, die Folie und/oder den folienartigen Träger während ihres Transports um 180° zu wenden bzw. umzudrehen.

Bei einem weiteren bevorzugten Verfahren wird die Folie nach dem Aufbringen bzw. Anbringen des Klebematerials aufgerollt. Besonders bevorzugt wird die Folie auf einen Rollenkern aufgerollt. Bei einem weiteren bevorzugten Verfahren wird die Folie im Anschluss an das Aufrollen verpackt, beispielsweise durch Anbringen einer weiteren Folie, beispielsweise eine Einhüllfolie.

Bei einem weiteren bevorzugten Verfahren besteht der folienartige Träger aus einem Kunststoffmaterial und insbesondere einem Kunststoffmaterial, welches aus einer Gruppe von Kunststoffmaterialien ausgewählt ist, welche Polyethylen, Polyurethan, Polyester, Polypropylen, Polyolefin, EVA, TPU, Aluminiumfolie, EPDM, PVC- Folie, andere Copolymere, Kombination hieraus und dergleichen enthält.

Bevorzugt weist die Folie und/oder der folienartige Träger eine Dicke auf, die geringer ist als 3,0 mm, bevorzugt geringer als 2,5 mm, bevorzugt geringer als 2,0 mm und besonders bevorzugt geringer als 1,5 mm. Bevorzugt weist die Folie eine Dicke auf, die größer ist als 0,05 mm, bevorzugt größer als 0,1 mm bevorzugt größer als 0,15 mm und besonders bevorzugt größer als 0,2 mm.

Bei einem weiteren bevorzugten Verfahren wird auf wenigstens einen Klebestreifen ein Abdeckfilm, insbesondere ein sogenannter Liner aufgetragen. Bevorzugt wird auf sämtliche Klebestreifen an einer der beiden Oberflächen ein Abdeckfilm aufgetragen.

Bei einem weiteren bevorzugten Verfahren wird die Folie auf mehrere Rollen aufgerollt und insbesondere auf Rollen, die in der Transportrichtung bezüglich einander versetzt sind. Dies wird unten unter Bezugnahme auf die Figuren genauer erläutert.

Bei einem weiteren bevorzugten Verfahren wird die Folie und/oder der folienartige Träger während des Anbringens des Klebematerials und Aufrollen mit im Wesentlichen konstanter Erstreckung in der Breitenrichtung transportiert. Dies bedeutet, dass die Folie nicht gefaltet wird, wie dies teilweise im Stand der Technik bekannt ist.

Bei einem bevorzugten Verfahren wird während der gesamten Aufbringung des Klebematerials auf beide Seiten bzw. Oberflächen die Breite der Folie und/oder des folienartigen Trägers nicht verändert und diese insbesondere nicht gefaltet oder geknickt und insbesondere nicht in einer Richtung gefaltet oder geknickt, die parallel zur Längsrichtung bzw. zur Transportrichtung der Folie und/oder des folienartigen Trägers ist.

Bei einem weiteren Verfahren wird die Folie und/oder der folienartige Träger während des Transports wenigstens einmal gewendet. Bevorzugt erfolgt das Wenden derart, dass diejenige Falte, die vor dem Wenden die Oberseite ist, nach dem Wenden die Unterseite ist. Bevorzugt wird die Transportrichtung der Folie und/oder des folienartigen Trägers wenigstens einmal geändert und bevorzugt wenigstens einmal umgekehrt.

Bei einem weiteren bevorzugten Verfahren wird während der gesamten Aufbringung des Klebematerials auf beide Seiten die Breite der Folie und/oder des folienartigen Trägers nicht verändert, und diese insbesondere nicht gefaltet oder geknickt, und insbesondere nicht in einer Richtung gefaltet oder geknickt, die parallel zur Längsrichtung bzw. zur Transportrichtung der Folie ist.

Bei einem weiteren bevorzugten Verfahren wird die Folie während des Transports wenigstens einmal gewendet.

Bei einem weiteren bevorzugten Verfahren also die Folie wenigstens abschnittweise in zueinander entgegengesetzten Richtungen gefördert bzw. transportiert.

Bei einem weiteren bevorzugten Verfahren wird wenigstens ein Klebestreifen mit einer Aussparung erzeugt, welche sich in der Transportrichtung der Folie erstreckt. Damit erstreckt sich sowohl der Klebestreifen in der Transportrichtung als auch die besagte Ausnehmung.

Bevorzugt weist die Ausnehmung eine Breite auf, die geringer ist und insbesondere erheblich geringer ist als diejenige des Streifens. Dabei kann die Aussparung eine Breite aufweisen, die kleiner ist als ein Fünftel der Breite des Klebestreifens, bevorzugt kleiner als ein Zehntel der Breite des Klebestreifens.

Besonders bevorzugt ist in dieser Aussparung weniger oder kein Klebemittel vorhanden. Dabei ist es möglich, dass diese Aussparung durch eine Positionierung der Beaufschlagungseinrichtung erzeugt wird, es kann jedoch auch ein zusätzliches Element wie etwa eine Rakel eingesetzt werden, um die Aussparung zu erzeugen.

Bevorzugt erfolgt daher eine Beaufschlagung mit kleinen Unterbrechungen im Kleberauftrag. Wie oben erwähnt, kann sowohl die vorderseitige als auch eine rückseitige Selbstklebung mit weiteren Klebstoffdüsen erfolgen.

Wie oben erwähnt, wird die Selbstklebung mit weiteren Klebstoffdüsen erfolgen.

Die oben erwähnte Verschiebbarkeit der Düsen gegeneinander, um so verschiedene breite Folien auszurüsten, ermöglicht, dass spätere Klebestreifen an der richtigen Positionierung angebracht werden.

Bei einem weiteren bevorzugten Verfahren ist daher die Position wenigstens einer Beaufschlagungseinrichtung in der Breitenrichtung veränderbar. Bevorzugt ist die Position der Beaufschlagungseinrichtung in der Querrichtung der Transportrichtung veränderbar.

Bei einem weiteren bevorzugten Verfahren wird wenigstens ein Schnitt in der Folie erzeugt, wobei sich dieser Schnitt vorteilhaft in der Transportrichtung erstreckt. Dabei ist es beispielsweise möglich, dass ein Seitenrand der Folie abgeschnitten wird. Bevorzugt wird derart geschnitten, dass die Klebefläche im aufzurollenden Produkt bis zu dessen Rand reicht, insbesondere bis zu dessen Rand betrachtet in der Breitenrichtung.

Bei einem weiteren bevorzugten Verfahren wird der Schnitt nach dem Anbringen wenigstens eines Klebematerials, und bevorzugt nach dem Anbringen aller Klebematerialien erzeugt.

Zu diesem Zweck können Schneidemesser vorgesehen sein, welche die besagten Schnitte in der Transportrichtung erzeugen. Dabei ist es auch möglich, dass diese Schneidelemente wie Schneidemesser in der breiten Richtung verstellbar sind, um an verschiedenen Positionen die besagten Schnitte anzuordnen.

Es wird daher vorgeschlagen, dass ein Zuschneiden der Streifen erfolgt, um eine (bei einer Einzelspur gefertigten Folie nicht mögliche) Kleberbeschichtung bis zum Folienrand zu erreichen.

Bei einem weiteren bevorzugten Verfahren wird die Folie wenigstens abschnittsweise in einer Puffereinrichtung, insbesondere einer Folienpuffereinrichtung transportiert. Dabei ist es beispielsweise möglich, dass eine Vielzahl von einander gegenüberliegender Rollen vorgesehen ist, um welche die Folie geführt wird, die beim Abstand dieser Rollen veränderbar ist, um zwischen diesen Rollen mehr oder weniger Folie bzw. Band aufzunehmen.

Bei einem weiteren bevorzugten Verfahren wird auf wenigstens einen Klebestreifen ein Abdeckmittel aufgebracht. Bei diesem Abdeckmittel kann es sich insbesondere um einen sogenannten "Liner" handeln, der bei der Benutzung die Klebstoffschicht bedeckt und der bei Bedarf abgezogen werden kann, um so die Klebeschicht freizugeben.

Bei einem weiteren bevorzugten Verfahren wird eine Vielzahl von ersten Klebestreifen auf die erste Oberfläche angebracht. Bevorzugt sind diese Klebestreifen nebeneinander in der Transportrichtung und insbesondere parallel zueinander angeordnet.

Bei einem bevorzugen Verfahren kann die Klebeschicht an einem geradlinigen Transportbereich der Folie angebracht werden. So könnte beispielsweise die Folie zwischen zwei nahe aneinander angeordneten Rollen transportiert werden und zwischen diesen Rollen mit dem Klebstoff beaufschlagt werden.

Um Bereiche ohne Klebestoff zu erzeugen ist es möglich, dass einzelne Kanäle der Beaufschlagungseinrichtung in vorgegebenen Abständen mittels einer Rakel oder anderer Elemente von Kleber freigehalten werden können. Wie oben erwähnt, kann eine Anordnung mehrerer Messer erfolgen, die bevorzugt auf einer Schiene verstellbar sind. Auf diese Weise kann beispielsweise ein 1.500 mm breites beschichtetes Foliendock in verschiedene Breiten geschnitten werden, beispielsweis Breiten von 50, 70, 100 oder 140 mm.

Entsprechend kann auch eine Anordnung von mehreren beispielsweise 20 mm breiten Hotmeltdüsen eine rückseitige Beschichtung in vorgegebenen Abständen ermöglichen. Dabei ist es ebenfalls möglich, dass diese Düsen auf einer Schiene gegeneinander verschiebbar angeordnet sind. Auf diese Weise werden mit einer Anlage unterschiedliche Breiten eines fertigen Produkts hergestellt.

Daneben wäre es auch möglich, dass zwei oder mehrere oszillierende Heißleimdüsen (in der Transportrichtung der Folie) hintereinander angeordnet sind, die eine Vielzahl von Klebestreifen derart aufbringen, dass viele Kammern abgeschlossen in unbeschichteten Bereichen entstehen.

Besonders bevorzugt erfolgt auf einer Oberfläche eine Beaufschlagung mit dem Klebstoff von mindestens 100 g/m², bevorzugt 120 g/m², bevorzugt 150 g/m², bevorzugt 170 g/m², bevorzugt 190 g/m² und besonders bevorzugt mindestens 200 g/m². Es könnten jedoch auch alternativ Klebstoffmengen in einem Bereich von 60 g/m² - 100 g/m² verwendet werden.

In einem weiteren bevorzugen Verfahren erfolgt ein Kleberauftrag von weniger als 500 g/m², bevorzugt weniger als 250 m², bevorzugt weniger als 300 g/m² und besonders bevorzugt weniger als 250 g/m².

Besonders bevorzugt wird auf die gegenüberliegende Seite beispielsweise auf der Unterseite ein Kleberauftrag aufgebracht mit mehr als 60 g/m², bevorzugt mehr als 80 g/m², und bevorzugt mehr als 100 g/m². Besonders bevorzugt wird hier der Klebestreifen aufgebracht in einer Menge von weniger als 600 g/m², bevorzugt weniger als 500 g/m², bevorzugt weniger als 400 g/m².

Besonders bevorzugt wird das Klebematerial aus einem Fass geschmolzen und wie oben erwähnt mittels verschiedener Breitschlitzdüsen aufgebracht. Dabei ist es bevorzugt möglich, dass das gesamte Foliendock auf einmal beschichtet wird. Die nötigen Unterbrechungen können mittels einer Rakel von Klebstoff freigehalten werden. Die rückseitigen Selbstklebeschichten werden ebenfalls mittels (insbesondere mehreren kleineren) Breitschlitzdüsen aufgebracht. Die Abstände und die Anzahl der kleineren Düsen sowie die Spuren die eingegebenen Fall zur Rakel zieht, sind gegenüber einander veränderbar.

Perspektivisch ergeben sich weitere Geometrien, beispielsweise kleine Klebestreifen, die regelmäßig angeordnet sind oder in Streifen in Sinusform die geschlossenen Kammern einer unbeschichteten Folie ergeben.

Die vorliegende Erfindung ist weiterhin auf eine Vorrichtung zum Herstellen einer Folie und insbesondere einer Anschlussfolie zum Abdichten von Baukörpern gerichtet. Diese Vorrichtung weist eine Transporteinrichtung auf, welche einen folienartigen Träger mittels entlang eines vorgegebenen Transportpfads transportiert wobei sich dieser folienartige Träger in der Transportrichtung und einer zu dieser Transportrichtung senkrechten Breitenrichtung erstreckt, und wobei dieser folienartige Träger eine erste Oberfläche aufweist, sowie eine zweite Oberfläche, welche der ersten Oberfläche gegenüberliegt.

Erfindungsgemäß weist die Vorrichtung eine erste Beaufschlagungseinrichtung auf, welche dazu geeignet und bestimmt ist, auf die erste Oberfläche ein fließfähiges Klebematerial aufzubringen, wobei dieses fließfähige Klebematerial als Klebestreifen auf dem folienartigen Träger aufgebracht wird, der sich in der Transportrichtung und in der Breitenrichtung erstreckt und eine zweite Beaufschlagungseinrichtung, welche dazu geeignet und bestimmt ist, auf die zweite Oberfläche ein fließfähiges Klebematerial aufzubringen, wobei dieses fließfähige Klebematerial als Klebestreifen auf dem folienartigen Träger aufgebracht wird, der sich in der Transportrichtung und in der Breitenrichtung erstreckt.

Bei einer weiteren bevorzugten Ausführungsform ist wenigstens eine Beaufschlagungseinrichtung und sind bevorzugt beide Beaufschlagungseinrichtungen oberhalb der Folie angeordnet. Bei einer weiteren bevorzugten Ausführungsform ist wenigstens eine Beaufschlagungseinrichtung und sind bevorzugt beide Beaufschlagungseinrichtungen in einer senkrecht zu der Transportrichtung stehenden Richtung bewegbar.

Bei einer weiteren bevorzugten Ausführungsform weist die Vorrichtung wenigstens eine Umlenkrolle auf, um welche herum die Folie transportiert wird.

Bei einer weiteren bevorzugten Ausführungsform weist die Vorrichtung wenigstens eine Schneideeinrichtung auf, welche die Folie -insbesondere entlang der Transportrichtung - schneidet.

Bei einer weiteren vorteilhaften Ausführungsform weist die Vorrichtung eine Puffereinrichtung zum Puffern der Folie bzw. des Folienmaterials und insbesondere des bereits mit den Klebeschichten versehenen Folienmaterials auf.

Die vorliegende Erfindung ist weiterhin auf eine Folie und insbesondere einer Anschlussfolie zum Abdichten von Baukörpern gerichtet, wobei sich diese Folie in einer Längsrichtung und einer zu dieser Längsrichtung senkrechten Breitenrichtung erstreckt, und wobei diese Folie eine erste Oberfläche aufweist, sowie eine zweite Oberfläche, welche der ersten Oberfläche gegenüberliegt, wobei auf der ersten Oberfläche eine erste Klebeschicht aufgebracht ist und auf der zweiten Oberfläche eine zweite Klebeschicht aufgebracht ist.

Erfindungsgemäß erstreckt sich diese erste Klebeschicht und diese zweite Klebeschicht streifenartig in der Längsrichtung und die Klebeschichten sind durch ein auf die Oberflächen aufgebrachtes fließfähiges Klebematerial ausgebildet.

Bei einer bevorzugten Ausführungsform sind auf der ersten Oberfläche wenigstens zwei streifenartige Klebeschichten angeordnet. Bevorzugt sind diese Klebeschichten parallel zueinander ausgebildet.

Bei einer weiteren bevorzugten Ausführungsform sind wenigstens zwei Klebeschichten bzw. Klebestreifen durch einen Kanal voneinander getrennt, wobei dieser Kanal kein Klebemittel aufweist oder Klebemittel in einer wesentlich geringeren Menge als diese im Bereich der Klebestreifen vorhanden ist.

Bevorzugt ist auf einer der Oberflächen eine Vielzahl von zueinander parallelen Klebestreifen angeordnet.

Bei einer weiteren bevorzugten Ausführungsform wäre es auch denkbar, dass wenigstens ein Klebestreifen und bevorzugt mehrere Klebestreifen einen sich in der Längsrichtung erstreckenden gekrümmten Verlauf annehmen, etwa einen sinusförmigen Verlauf.

Bei einer weiteren bevorzugten Ausführungsform ist die Folie als Folienrolle konfektioniert. Bei einer weiteren bevorzugten Ausführungsform ist auf wenigstens einer Klebeschicht ein Abdeckmittel und insbesondere ein Abdeckfilm angeordnet.

Bei einer weiteren vorteilhaften Ausführungsform reicht die Klebschicht bis an einen Rand der Folie, der sich in der Längsrichtung erstreckt.

Bei einer weiteren vorteilhaften Ausführungsform ist die Folie nach einem oben beschriebenen Verfahren hergestellt.

Die Längsrichtung entspricht dabei bevorzugt der Transportrichtung im Rahmen des Herstellungsverfahrens.

Weitere Vorteile und Ausführungsformen ergeben sich aus den beigefügten Zeichnungen.

Darin zeigen:
- Fig. 1: eine Ansicht einer mit Klebefilmen bestückten Folie;
- Fig. 2: eine Darstellung eines Herstellungsverfahrens;
- Fig. 3: eine weitere Darstellung eines Herstellungsverfahrens nach dem Stand der Technik;
- Fig. 4: eine weitere Darstellung eines Herstellungsverfahrens nach dem Stand der Technik;
- Fig. 5: eine erfindungsgemäße Vorrichtung zum Herstellen der Folie;
- Fig. 6: eine Detailansicht einer Vorrichtung zum Herstellen der Folie;
- Fig. 7: eine Darstellung eines erfindungsgemäßen Herstellungsverfahrens;
- Fig. 8: eine Darstellung einer Puffereinrichtung;
- Fig. 9: eine Darstellung einer mit Klebstoff beschichteten Folie;
- Fig. 10: eine weitere erfindungsgemäße mit Klebstoff beschichtete Folie;
- Fig. 11: eine in alternativer Weise mit Klebstoff beschichtete Folie;
- Fig. 12: eine Darstellung einer Folie nach dem Stand der Technik;
- Fig. 13: eine Darstellung einer erfindungsgemäßen mit Klebstoff beschichteten Folie.

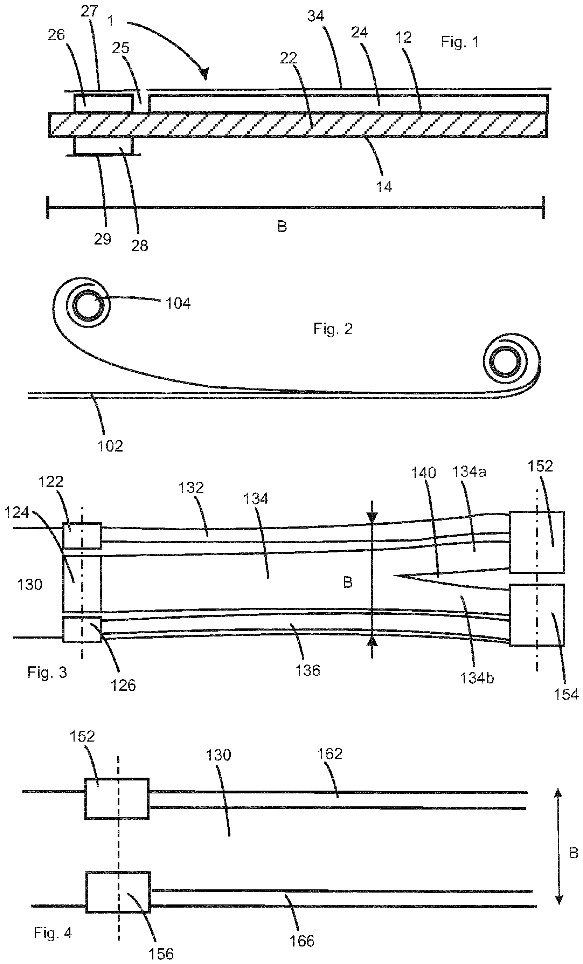

Figur 1 zeigt eine Folie, insbesondere eine Anschlussfolie 1. Diese weist einen folienartigen Träger bzw. eine Folie 22 auf, auf welchen eine erste Selbstklebeschicht 24 und eine zweite Selbstklebeschicht 26 aufgetragen ist. Zwischen diesen Selbstklebeschichten ist ein Spalt 25 angeordnet. In diesem Spalt befindet sich weniger oder kein Klebemittel. Das Bezugszeichen 28 kennzeichnet eine weitere Selbstklebeschicht, die auf der Rückseite bzw. Unterseite 14 der Folie 22 angeordnet ist. Das Bezugszeichen kennzeichnet die Breitenrichtung des folienartigen Trägers, das heißt hier in der Richtung, die sich senkrecht zur Transportrichtung erstrecken würde. Die Bezugszeichen 27, 29 und 34 beziehen sich auf Abdeckfilme, die auf den Klebestreifen bzw. Klebungen 26, 28 und 24 angeordnet sind. Bei diesen Klebefilmen kann es sich beispielsweise um Silikonpapier handeln. Mit dem Begriff Folie wird daher sowohl das gesamte Produkt, als auch der folienartige Träger bezeichnet. Insbesondere wird der Begriff folienartiger Träger vor und während der Beschichtung mit dem Klebstoff verwendet und der Begriff Folie nach dem Beschichten

Figur 2 zeigt ein Herstellungsverfahren nach dem Stand der Technik. Dabei ist der Klebstoff 104 eine in der Breite vorkonfektionierte Selbstklebung der Lagen 102, die mittels silikonisiertem Papier oder Folie voneinander getrennt sind. In diesem Fall erfolgt ein Aufrollen bzw. ein Andrücken des Selbstklebefilms mittels (nicht gezeigten) Rollen.

Figur 3 veranschaulicht das derzeit im internen Stand der Technik der Anmelderin praktizierte Verfahren. Dabei werden auf die Folie 130 Selbstklebestreifen 132, 134 und 136 aufgeklebt. Dies kann dabei mittels Rollen 122, 124 und 126 erfolgen, auf denen diese Selbstklebungen 132, 134 und 136 aufgerollt sind. Die Gesamtfolie hat hier eine Breite der zweifachen gewünschten Breite. Auf diese Weise können zwei fertige Produkte (am Ende aufgerollt) erzeugt werden. Die breite Schicht 134 ist dabei eine vollflächige Schicht. Diese ist durch einen Streifen bzw. Kanal von den jeweiligen Schichten 132 und 136 getrennt.

Das anfänglich doppelt breite Produkt wird in der Mitte mittels eines Schneidmessers aufgespalten, wobei die Schicht 134 bzw. das fertige Produkt in zwei Teile 134a und 134b aufgespalten wird. Die Schichten 132 und 136 können dabei in einem Montagezustand einseitig an einem Fenster aufgeklebt werden. Die beiden geschnittenen Streifen werden auf Rollen 152 und 154 aufgerollt.

Figur 4 zeigt die Beaufschlagung weiterer Klebestreifen 162 und 166 auf der Rückseite der Folie. Auch diese Streifen 162 und 166 werden hier als Selbstklebestreifen von Rollen 152 und 156 aufgebracht.

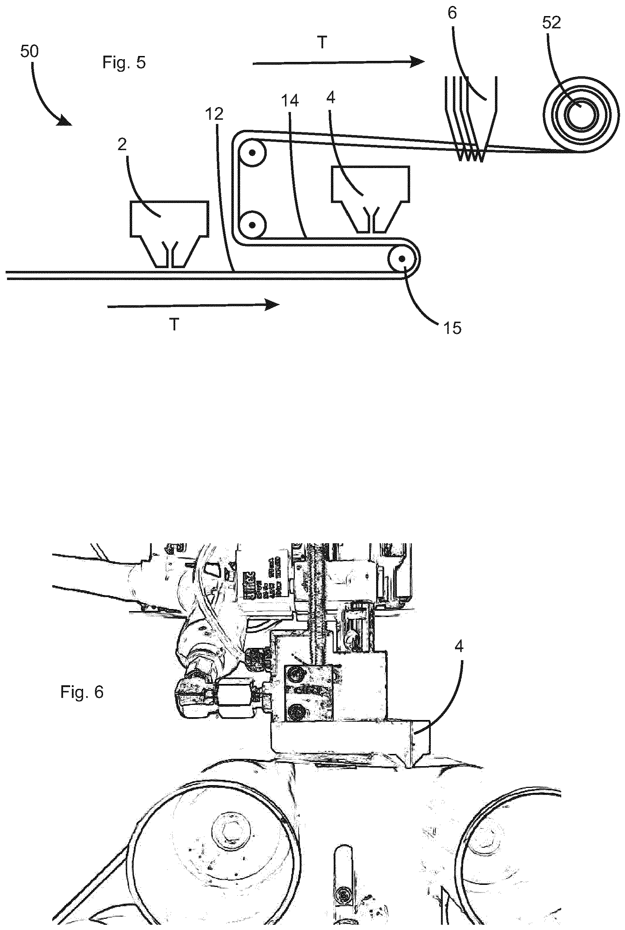

Figur 5 zeigt eine schematische Darstellung einer erfindungsgemäßen Vorrichtung zum Herstellen einer Folie. Dabei bezieht sich das Bezugszeichen T auf die Transportrichtung der Folie bzw. des Folienträgers. Das Bezugszeichen 2 kennzeichnet eine erste Beaufschlagungseinrichtung, welche den Klebstoff auf die Oberfläche 12 der Folie aufbringt.

Das Bezugszeichen 15 kennzeichnet eine Umlenkrolle, die zum Umlenken des folienartigen Trägers dient, sodass nunmehr die ursprüngliche Unterseite 14 nach oben weist. Das Bezugszeichen 4 kennzeichnet entsprechend eine zweite Beaufschlagungseinrichtung, die zum Beaufschlagen der Oberfläche der Unterseite 14 mit dem Klebestreifen dient. Nach weiterem Umlenken wird die Folie abermals gewendet, sodass wieder die Seite 12 oben liegt und anschließend wird die Folie mit einer Vielzahl von Schneidmessern 6 in der Transportrichtung T geschnitten. Die einzelnen Streifen werden jeweils auf Rollen 52 aufgewickelt.

Figur 6 zeigt eine Darstellung der Beaufschlagungseinrichtung 4, die den Klebstoff auf die den folienartigen Träger aufbringt. Dabei erfolgt bevorzugt das Aufbringen zwischen zwei Förderrollen, sodass die Folie selbst eine hinreichende Spannung aufweist.

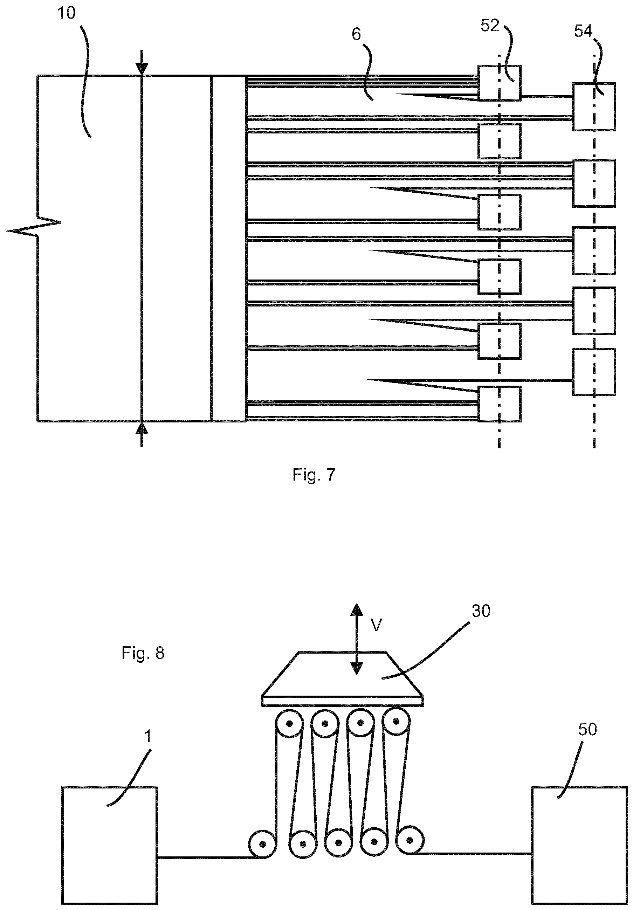

Figur 7 zeigt eine Veranschaulichung zur Herstellung einer Vielzahl von Rollen. Man erkennt hier, dass die Folie 10 von einer Vielzahl von Messern 6 geschnitten wird und die einzelnen Streifen anschließend auf Rollen 52 und 54 aufgerollt werden. Dabei sind die Rollen 52 und 54 in der Transportrichtung wechselweise gegeneinander versetzt, damit auf diese Weise die Rollen näher aneinander gerückt werden können.

Figur 8 zeigt eine weitere Darstellung einer erfindungsgemäßen Vorrichtung. Dabei können hier auch die "Diffusionskanäle aufgebracht werden, die insbesondere in vorgegebenen Abständen mittels einer Rakel vom Klebstoff freigehalten werden können. Durch die verstellbare Anordnung der Schneidmesser 6 und gegebenenfalls auch der Rollen 52, beispielweise durch die Anordnung in einer auf einer Schiene verstellbaren Abständen, kann das beispielsweise ursprüngliche 1500 mm breite Band in verschiedene Breiten geschnitten werden, beispielsweise 50 mm, 70 mm, 100 mm, 140 mm und dergleichen.

Die Beaufschlagungseinrichtungen können mehrere Hotmeltdüsen aufweisen, welche sowohl die vorderseitige als auch die rückseitige Klebeschicht aufbringen können.

Figur 8 zeigt eine Darstellung einer Puffereinrichtung. Hier ist wieder die erfindungsgemäße Vorrichtung 1 gezeigt, dieser ist anschließend eine Puffereinrichtung 30 nachgeordnet, mit der die Länge des Bandes, welches letztlich zum Zuschnitt oder zur Verpackung gelangt, verändert werden kann. Auf diese Weise ist es auch möglich, dass ein Betrieb fortgesetzt wird, selbst wenn in der Vorrichtung 1 oder der Vorrichtung 50 Stillstände auftreten. Die Puffereinrichtung 30 weist dabei ein Pufferelement auf, welches in der vertikalen Richtung V bewegbar ist, um so die Speicherkapazität des Puffers zu vergrößern oder zu verkleinern.

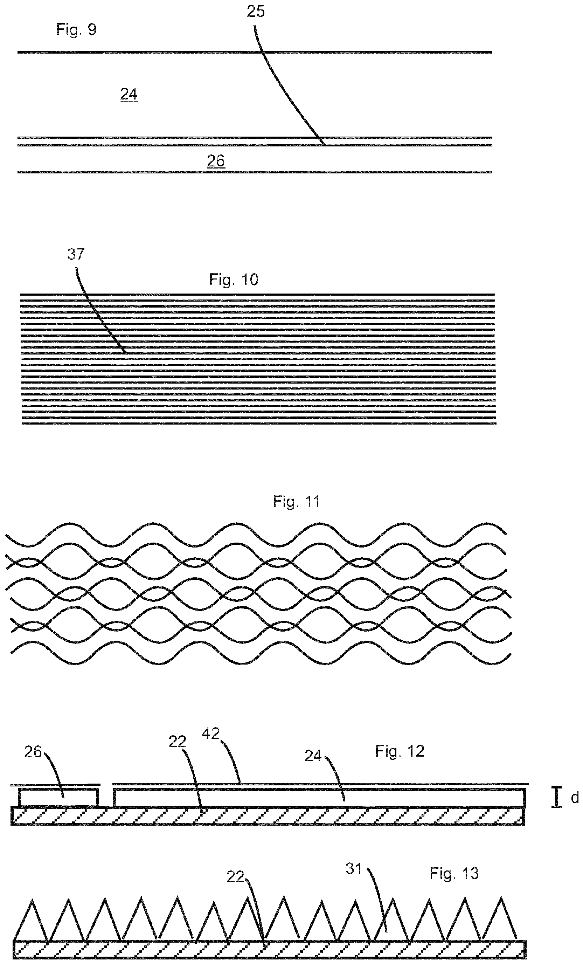

Figur 9 zeigt die Folie in der aus dem Stand der Technik der Anmelderin bekannten Geometrie. Hierbei sind wieder die Klebeschichten 24 und 26 aufgebracht sowie ein zwischenlegender Kanal. Abgesehen von dem Kanal 25 ist der übrige Bereich der Oberfläche voll beschichtet.

Bei der in Figur 10 gezeigten Ausgestaltung wird vorgeschlagen, dass eine Vielzahl von Einzelstreifen 37 aufgebracht wird, welche sich jeweils parallel zur Längsrichtung bzw. der Transportrichtung der Folie erstrecken.

Figur 11 zeigt eine weitere mögliche Vorgehensweise. Hier werden durch zwei oder mehrere oszillierende Hotmelt-Düsen, die in der Transportrichtung hintereinander angeordnet sind, eine Vielzahl von Streifen aufgebracht, sodass viele Kammern mit abgeschlossenen und unbeschichteten Bereichen entstehen.

Figur 12 veranschaulicht die derzeitige Situation. Hier sind die beiden Klebeaufträge 24 und 26 in einer gewissen Dicke d angeordnet.

Figur 13 zeigt die erfindungsgemäße Vorgehensweise. Man erkennt, dass auch bei einer gleichen Klebermenge die einzelnen Klebstoffraupen 31 eine erheblich größere Dicke aufweisen als die Schichtdichte des Klebers bei der in Figur 12 gezeigten Ausgestaltung. Auf diese Weise kann hier der Klebstoff effizienter aufgebracht werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Folie
- 2: erste Beaufschlagungseinrichtung
- 4: zweite Beaufschlagungseinrichtung
- 6: Schneidmesser
- 10: Folie
- 12: Oberfläche der Folie
- 14: Rückseite der Folie bzw. Unterseite
- 15: Rolle
- 22: Träger, Folie
- 24: erste Selbstklebeschicht
- 25: Spalt, Kanal
- 26: zweite Selbstklebeschicht
- 26: Klebung
- 27: Abdeckfilm
- 28: Selbstklebeschicht
- 28: Klebung
- 29: Abdeckfilm
- 30: Puffereinrichtung
- 31: Klebstoffraupen bzw. Klebstoff in einzelnen schmalen Streifen
- 34: Abdeckfilm, Liner
- 37: Klebefilm in schmalen Streifen
- 42: Abdeckfilm. Liner
- 50: Vorrichtung
- 52: Rollen
- 54: Rollen
- 102: Lage
- 104: Klebstoff
- 122: Rollen
- 124: Rollen
- 126: Rollen
- 130: Folie
- 132: Selbstklebestreifen
- 134: Selbstklebestreifen
- 134a: erster Teil des fertigen Produkts
- 134b: zweiter Teil des fertigen Produkts
- 136: Selbstklebestreifen
- 152: Rollen
- 154: Rollen
- 156: Rolle
- 162: Klebestreifen
- 166: Klebestreifen
- T: Transportrichtung

## Patentansprüche

1. Verfahren zum Herstellen einer Folie (1) und insbesondere einer Anschlussfolie zum Abdichten von Baukörpern wobei ein folienartiger Träger (22) mittels einer Transporteinrichtung entlang eines vorgegebenen Transportpfads transportiert wird und wobei sich dieser folienartige Träger (22) in der Transportrichtung (T) und einer zu dieser Transportrichtung senkrechten Breitenrichtung (B) erstreckt, und wobei dieser folienartige Träger eine erste Oberfläche (12) aufweist, sowie eine zweite Oberfläche (14), welche der ersten Oberfläche (12) gegenüberliegt,
**dadurch kennzeichnet, dass**
während des Transports mittels einer ersten Beaufschlagungseinrichtung (2) auf die erste Oberfläche (12) ein fließfähiges Klebematerial aufgebracht wird, wobei dieses fließfähige Klebematerial als Klebestreifen (16) auf dem folienartigen Träger (22) aufgebracht wird, der sich in der Transportrichtung (T) und in der Breitenrichtung (B) erstreckt und wobei mittels einer zweiten Beaufschlagungseinrichtung (4) auf die zweite Oberfläche (14) ein fließfähiges Klebematerial aufgebracht wird, wobei dieses fließfähige Klebematerial als Klebestreifen auf dem folienartigen Träger (22) aufgebracht wird, der sich in der Transportrichtung (T) und in der Breitenrichtung erstreckt.

2. Verfahren nach Anspruch 1,
**dadurch gekennzeichnet, dass**
das Klebematerial ein Hotmelt - Klebematerial ist.

3. Verfahren nach wenigstens einem der vorangegangenen Ansprüche,
**dadurch gekennzeichnet, dass**
wenigstens eine Beaufschlagungseinrichtung (2, 4) das Klebematerial mittels wenigstens einer Düseneinrichtung auf die Oberfläche (12, 14) anbringt.

4. Verfahren nach wenigstens einem der vorangegangenen Ansprüche,
**dadurch gekennzeichnet, dass**
wenigstens eine Beaufschlagungseinrichtung und bevorzugt beide Beaufschlagungseinrichtungen (2, 4) oberhalb des zu beaufschlagenden folienartigen Trägers angeordnet sind.

5. Verfahren nach wenigstens einem der vorangegangenen Ansprüche,
**dadurch gekennzeichnet, dass**
die Folie nach dem Anbringen des Klebematerials aufgerollt wird.

6. Verfahren nach dem vorangegangenen Anspruch,
**dadurch gekennzeichnet, dass**
die Folie nach dem Anbringen des Klebematerials und vor dem Aufrollen mit im Wesentlichen konstanter Erstreckung in der Breitenrichtung transportiert wird.

7. Verfahren nach wenigstens einem der vorangegangenen Ansprüche,
**dadurch gekennzeichnet, dass**
die Folie und/oder der folienartige Träger (22) während des Transports wenigstens einmal gewendet wird.

8. Verfahren nach wenigstens einem der vorangegangenen Ansprüche,
**dadurch gekennzeichnet, dass**
wenigstens ein Klebestreifen mit einer Aussparung erzeugt wird, welche sich in der Transportrichtung des folienartigen Trägers (22) erstreckt.

9. Verfahren nach wenigstens einem der vorangegangenen Ansprüche,
**dadurch gekennzeichnet, dass**
die Position wenigstens einer Beaufschlagungseinrichtung in der Breitenrichtung veränderbar ist.

10. Verfahren nach wenigstens einem der vorangegangenen Ansprüche,
**dadurch gekennzeichnet, dass**
wenigstens ein Schnitt in dem folienartigen Träger erzeugt wird, wobei dieser Schnitt sich vorteilhaft in der Transportrichtung erstreckt.

11. Verfahren nach wenigstens einem der vorangegangenen Ansprüche,
**dadurch gekennzeichnet, dass**
die Folie wenigstens abschnittsweise in einer Puffereinrichtung transportiert wird.

12. Verfahren nach wenigstens einem der vorangegangenen Ansprüche,
**dadurch gekennzeichnet, dass**
auf wenigstens einen Klebestreifen ein Abdeckmittel aufgebracht wird.

13. Verfahren nach wenigstens einem der vorangegangenen Ansprüche,
**dadurch gekennzeichnet, dass**
eine Vielzahl von ersten Klebestreifen auf die erste Oberfläche angebracht werden.

14. Vorrichtung zum Herstellen einer Folie (1) und insbesondere einer Anschlussfolie zum Abdichten von Baukörpern mit einer Transporteinrichtung, einen folienartigen Träger (22) entlang eines vorgegebenen Transportpfads transportiert wobei sich diese Folie in der Transportrichtung (T) und einer zu dieser Transportrichtung senkrechten Breitenrichtung (B) erstreckt, und wobei dieser folienartige Träger eine erste Oberfläche (12) aufweist, sowie eine zweite Oberfläche (14), welche der ersten Oberfläche gegenüberliegt,
**dadurch kennzeichnet, dass**
die Vorrichtung (50) eine erste Beaufschlagungseinrichtung (2) aufweist, welche dazu geeignet und bestimmt ist, auf die erste Oberfläche (12) ein fließfähiges Klebematerial aufzubringen, wobei dieses fließfähige Klebematerial als Klebeschicht auf dem folienartigen Träger (22) aufgebracht wird, der sich in der Transportrichtung (T) und in der Breitenrichtung (B) erstreckt und eine zweite Beaufschlagungseinrichtung (4), welche dazu geeignet und bestimmt ist, auf die zweite Oberfläche (14) ein fließfähiges Klebematerial aufzubringen wird, wobei dieses fließfähige Klebematerial als Klebestreifen auf dem folienartigen Träger (22) aufgebracht wird, der sich in der Transportrichtung (T) und in der Breitenrichtung erstreckt.

15. Folie (1) und insbesondere einer Anschlussfolie zum Abdichten von Baukörpern, wobei sich diese Folie in einer Längsrichtung (T) und einer zu dieser Längsrichtung senkrechten Breitenrichtung (B) erstreckt, und wobei diese Folie eine erste Oberfläche (12) aufweist, sowie eine zweite Oberfläche (14), welche der ersten Oberfläche gegenüberliegt, wobei auf der ersten Oberfläche eine erste Klebeschicht aufgebracht ist und auf der zweiten Oberfläche (14) eine zweite Klebeschicht aufgebracht ist, **dadurch gekennzeichnet, dass**
sich diese erste Klebeschicht und diese zweite Klebeschicht streifenartig in der Längsrichtung erstreckt und die Klebeschichten durch ein auf die Oberflächen aufgebrachtes fließfähiges Klebematerial ausgebildet sind.
